# EUROPEAN PATENT APPLICATION

(11) **EP 4 572 181 A1**
(43) Date of publication of application: **18.06.2025**
(21) Application number: 24218749.0
(22) Date of filing: 10.12.2024
(51) Int. Cl.: H04B 7/185

(54) **SYSTEMS AND METHODS FOR MARITIME SURVEILLANCE IMAGING AND SHIP DETECTION**

(30) Priority: 11.12.2023 US 202363608464 P
(71) Applicant: MDA Systems Ltd., Richmond, BC V6V 2J3 (CA)
(72) Inventor: Malaviarachchi, Pat, Richmond, British Columbia, V6V 2J3 (CA); Richardson-Little, William, Richmond, British Columbia, V6V 2J3 (CA)
(74) Representative: Grünecker Patent- und Rechtsanwälte PartG mbB

(57) **Abstract**

Provided herein are systems and methods for enhanced marine ship detection. A system includes a mission planning system for generating a set of tasking commands to send to a plurality of satellites in an intersatellite link (ISL) relay layer, a plurality of Earth observation satellites having overlapping accessible swaths, wherein a first satellite collects first sensor data at a first set of coordinates based on a first tasking command and sends the data to the ISL relay layer, and at least a second satellite trailing behind the first satellite collects second sensor data at a second set of coordinates based on the second tasking command and the first sensor data, and sends the second sensor data to the ISL relay layer, and a reception system to receive ship detection data including the first sensor data and the second sensor data and to generate at least one vessel detection report.

## Description

### Technical Field

The following relates generally to earth observation and satellite imaging, and more particularly to satellite-based observation and surveillance using multiple satellites.

### Introduction

Satellites provide a great deal of the remote sensing imagery commonly used today. Satellites have several unique characteristics which make them particularly useful for remote sensing of the Earth's surface. One particular domain in which satellite imaging is used is earth observation. Various problems in earth observation may benefit from satellite imaging including land intelligence and change detection, asset and infrastructure monitoring, surface deformation monitoring, oil pollution monitoring, humanitarian assistance and disaster relief (HADR) including flood and earthquake monitoring, agriculture monitoring, and forestry monitoring. Vessel detection, including the ability to detect non-transmitting dark ships and identify illegal fishing activity, can also be accomplished using satellite imaging. However, satellites generally have a large imaging swath width or a high resolution, not both. Therefore, for example, it is difficult to both detect many vessels within a large Area of Interest (AOI) and collect high quality images of those vessels in a timely manner. As the demand for satellite-based imaging increases, new systems and methods are desired that may provide improvements over existing ones.

Currently, Earth Observation (EO) satellites can be tasked with orders, or downlink data only when passing over a ground station. While ground station networks continue to grow, users must consider "flight time" of the satellite until it appears within a ground antenna communication cone. Long periods of no communication exist, particularly in areas like the middle of the ocean where there are no ground stations. This can often result in long latencies in the tasking, collection, processing, exploitation and dissemination (TCPED) intelligence cycle. Satellites using different modalities do not typically follow the same ground track and, therefore, cannot work together in close concert. Furthermore, the unique collection characteristics of satellites of different modalities seldom work together as a single intelligence gathering system.

Accordingly, there is a need for improved systems and methods for satellite-based observation and surveillance, to achieve both large imaging swath widths and high resolution, in applications such as maritime surveillance or ship detection, that overcome at least some of the disadvantages of existing systems and methods.

### Summary

Provided herein may be a system for enhanced marine ship detection, comprising a ground segment including a mission planning system configured to receive an order for ship detection from an ordering device generate a set of tasking commands based on the order, wherein each tasking command includes a set of coordinates for data collection by a satellite, an intersatellite link (ISL) relay layer comprising a plurality of relay satellites in Earth orbit, the ISL relay layer configured to receive the set of tasking commands from the mission planning subsystem, a plurality of Earth observation satellites having overlapping accessible swaths, including: a first Earth observation satellite having a first sensor and a first imaging swath width, the first Earth observation satellite configured to receive a first tasking command of the set of tasking commands, the first tasking command including a first set of coordinates, from the ISL relay layer, collect first sensor data at the first set of coordinates, and send the first sensor data to the ISL relay layer; a set of trailing Earth observation satellites including at least a second Earth observation satellite, the second Earth observation satellite having a second sensor and a second imaging swath width, wherein the second Earth observation satellite trails behind the first Earth observation satellite on the same ground track as the first Earth observation satellite, the second Earth observation satellite configured to receive a second tasking command, including a second set of coordinates, from the ISL relay layer, collect second sensor data at the second set of coordinates, and send the second sensor data to the ISL relay layer, wherein the second set of coordinates may be based on the first sensor data; and a reception system to receive ship detection data including the first sensor data and second sensor data from the ISL relay layer, wherein the ship detection data may be processed to generate at least one vessel detection report.

The vessel detection report may include at least one of a position of at least one ship, an estimated size of at least one ship, a heading of at least one ship, a velocity of at least one ship, an AIS data correlation of at least one ship, an image chip of at least one ship, a vessel of interest (VOI) classification of at least one ship.

The set of trailing Earth observation satellites further comprises N Earth observation satellites which each trail in sequence behind the second Earth observation satellite, wherein N may be any positive integer, each of the N Earth observation satellites having a respective sensor and a respective imaging swath width, wherein each of the N Earth observation satellites may be configured to receive a respective tasking command from N tasking commands sent to the ISL relay layer by the mission planning system, collect respective sensor data based on the respective tasking command, and send the respective sensor data to the ISL relay layer.

The second tasking command may be altered based on the first sensor data.

The ISL relay layer may receive the N respective tasking commands from the mission planning system before the first sensor data may be collected and sent to the ISL relay layer.

Each of the N respective tasking commands may be altered based on data from Earth observation satellites which each of the N Earth observation satellites trails.

The ground segment may further include at least one ordering system configured to generate and send orders to the mission planning system.

The ground segment may further include at least one spacecraft control system configured to control and maintain operation of any of the plurality of Earth observation satellites.

The ground segment may further include at least one data chain subsystem configured to receive image data from at least one ground terminal and reconstruct the image data into raw data for processing into products.

The first sensor data may be processed on the first Earth observation satellite to generate a vessel detection report.

The first sensor data may be processed by at least one relay satellite of the plurality of relay satellites to generate a vessel detection report.

The second sensor data may be processed on the second Earth observation satellite to generate a vessel detection report.

The second sensor data may be processed by at least one relay satellite of the plurality of relay satellites to generate a vessel detection report.

At least one of the first sensor data and the second sensor data may be sent to a ground terminal of the ground segment via the plurality of relay satellites to be processed by the ground terminal.

The reception system may process at least one of the first sensor data and the second sensor data to generate a vessel detection report.

The reception system may generate at least one vessel detection report to be displayed on a graphical user interface of an end user device.

The ordering device and the end user device may be the same.

The second Earth observation satellite may have a smaller swath width and a greater resolution than the first Earth observation satellite.

Each of the N Earth observation satellites may have a smaller swath width and a greater resolution than a preceding Earth observation satellite.

A method of maritime surveillance may comprise receiving, by a network interface or input interface at a mission planning system of a ground segment, an order for maritime surveillance from an ordering device, generating, by a processor of the mission planning system, a plurality of tasking commands based on the order, wherein each tasking command includes a set of coordinates for a satellite, transmitting, via an antenna system of the ground segment, the plurality of tasking commands to an intersatellite link (ISL) relay layer as an RF signal, transmitting, by an antenna system of the ISL relay layer, a first tasking command of the plurality of tasking commands to a first Earth observation satellite, wherein the first tasking command includes a first set of coordinates, collecting, by a first sensor of the first Earth observation satellite having a first remote sensing swath width, first remote sensing data at the first set of coordinates received from the ISL relay layer and transmitting the first remote sensing data to the ISL layer via an antenna system of the first Earth observation satellite, cross-cueing, via the ISL relay layer, at least a second earth observation satellite to collect a second remote sensing data, at a second set of coordinates, using a second sensor having a second remote sensing swath width, the cross-cueing based on a second tasking command and the first remote sensing data, wherein the first Earth observation satellite and the second Earth observation satellite have overlapping accessible swath widths and wherein the second Earth observation satellite trails the first Earth observation satellite on the same ground track, transmitting, via an antenna system of the second earth observation satellite, the second remote sensing data to the ISL relay layer, transmitting, via the antenna system of the ISL relay layer, maritime surveillance information as an RF signal to a reception system of the ground segment for display at an end user device of the ground segment, displaying, on a graphical user interface of an end user device, at least one vessel detection report generated from the maritime surveillance information.

The method may further comprise cross-cueing, via the intersatellite link relay layer, N Earth observation satellites, wherein N is any positive integer, to collect respective remote sensing data, wherein each of the N Earth observation satellites trails in sequence behind the second Earth observation satellite, the cross-cueing for each of the N Earth observation satellites is based on a respective tasking command and the remote sensing data from each of the Earth observation satellites which each respective N Earth observation satellites is trailing, and wherein each of the N Earth observation satellites has a Nth remote sensing swath width and each of the N Earth observation satellites has an overlapping accessible swath width with the first Earth observation satellite and the second Earth observation satellite.

The method may further comprise sending the order to the mission planning system from an ordering system.

The method may further comprise at least one spacecraft control system configured to control any of the plurality of Earth observation satellites.

The method may further comprise at least one data chain subsystem configured to receive image data from at least one ground terminal and reconstruct the image data into raw data for processing into products.

The method may further comprise processing the first remote sensing data on the first Earth observation satellite to generate at least one vessel detection report.

The method may further comprise processing the first remote sensing data by at least one relay satellite of the plurality of relay satellites to generate at least one vessel detection report.

The method may further comprise processing the second remote sensing data on the second Earth observation satellite to generate at least one vessel detection report.

The method may further comprise processing the second remote sensor data by at least one relay satellite of the plurality of relay satellites to generate at least one vessel detection report.

The method may further comprise sending at least one of the first sensor data and the second sensor data to a ground terminal via the ISL relay layer to be processed by the ground terminal to generate at least one vessel detection report.

The method may further comprise processing at least one of the first sensor data and the second sensor data by the reception system to generate at least one vessel detection report.

The method may further comprise wherein the end user places the order with the mission planning system.

The method may further comprise wherein the second Earth observation satellite may have a smaller swath width and a greater resolution than the first Earth observation satellite.

The method may further comprise wherein each of the N Earth observation satellites may have a smaller swath width and a greater resolution than a preceding Earth observation satellite.

A method of marine ship detection may comprise: tasking a broad area radiofrequency (RF) collector satellite to collect RF signals from marine emitters from an area at a first set of coordinates defined by a first tasking command, collecting RF data at the first set of coordinates using the RF collector of the broad area RF collector satellite, identifying a geolocation of a marine emitter in the area using the collected RF data, the geolocation defined by coordinates, the marine emitter being a vessel of interest (VOI), cross-cueing, through an ISL relay layer comprising a plurality of relay satellites, a C-band SAR satellite to collect C-band SAR data of the VOI using the geolocation as a second set of coordinates, wherein the C-band SAR satellite may have an overlapping accessible swath with the broad area RF collector satellite, collecting C-band SAR data and AIS data at the second set of coordinates using the C-band SAR satellite, wherein the AIS data may be used to identify the VOI, cross-cueing, through the ISL relay layer, an X-band SAR satellite to collect X-band SAR data of the VOI, wherein the C-band SAR data determines a third set of coordinates, and wherein the X-band SAR satellite may have an overlapping accessible swath with the broad area RF collector satellite and the C-band SAR satellite, collecting X-band SAR data at the third set of coordinates using the X-band SAR satellite, cross-cueing, through ISL relay layer, an optical satellite to collect optical image data of VOI, wherein the X-band SAR data determines a fourth set of coordinates, and wherein the optical satellite may have an overlapping accessible swath with the broad area RF collector satellite, the C-band SAR satellite, and the X-band SAR satellite, collecting optical image data of the VOI at the fourth coordinates using the optical satellite, downlinking marine ship detection data from including at least the optical image data to a ground segment by one of the optical satellite and the ISL relay layer.

The marine emitters may be any of S-band marine radar, X-band marine radar, L-band comms, UHF comms, or VHF comms emitters.

A vessel detection report may be sent to the ground segment via the ISL relay layer for at least one of the broad area RF collector satellite, the C-band SAR satellite, the X-band SAR satellite, and the optical satellite, wherein the vessel detection report comprises at least one of: a position of at least one ship, an estimated size of at least one ship, a heading of at least one ship, a velocity of at least one ship, an AIS data correlation of at least one ship, an image chip of at least one ship, a vessel of interest (VOI) classification of at least one ship.

Other aspects and features will become apparent to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1A is a block diagram of a ship detection system, including a plurality of different modality satellites having overlapping accessible swaths, for detection of vessels of interest in an area of interest, according to an embodiment;
Figure 1B is a block diagram of the ship detection system of Figure 1A, illustrating ordering and planning within the system, according to an embodiment;
Figure 1C is a block diagram of the ship detection system of Figure 1A, illustrating transmission of imaging coordinates within the system, according to an embodiment;
Figure 1D is a block diagram of the ship detection system of Figure 1A, illustrating transmission of collected data to a reception system, according to an embodiment;
Figure 2 is a flow diagram of method of detecting vessels of interest via satellite imaging, such as by using the system of Figure 1, according to an embodiment;
Figure 3 is a block diagram of a ship detection system, according to another embodiment;
Figure 4 is a flow diagram of a method of detecting vessels of interest via satellite imaging, such as by using the system of Figure 3, according to an embodiment;
Figure 5 is schematic diagram of an example of the ship detection system of Figure 3, according to an embodiment;
Figure 6 is a flow diagram of a method of data collection for maritime surveillance, according to an embodiment; and
Figure 7 is an example satellite image generated by the system of the present disclosure showing a polygon area (the AOI) and a single remote sensing swath overlayed on the image, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and/or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article.

The following relates generally to earth observation and satellite imaging, and more particularly to satellite-based observation and surveillance systems using multiple satellites and intersatellite links (ISL). The system may be used for any earth observation in an area of interest (AOI), and may be particularly useful for maritime surveillance and ship detection.

The ship detection system of the present disclosure may significantly improve the ability to detect, track and characterize maritime vessels of interest ("VOIs"). The vessels may be "dark targets" that are not transmitting automatic identification system (AIS) signals or vessels that exhibit other suspicious behavior. AIS is an automatic tracking system that uses transceivers on ships and is used by vessel traffic services. Satellites may be used to detect AIS signatures, in which case the term Satellite-AIS (S-AIS) may be used. S-AIS may be used for collision avoidance, identification, and location information, as well as for maritime domain awareness, search and rescue, environmental monitoring, and maritime intelligence applications. Generally, dark ship detection includes identifying vessels that are not transmitting AIS or are spoofing AIS information and hotspots where potential illegal activity is occurring.

In an embodiment, the system includes a plurality of Earth Observation (EO) satellites with varying remote sensing payloads, including radiofrequency (RF) detection, synthetic aperture radar (SAR), automatic identification system (AIS), and optical imaging.

As used herein, "field of regard" ("FOR"), or "access", is the total area that has the potential to be perceived by a movable sensor on a satellite. That is, the field of regard is the area which can be perceived within the range of motion of the movable sensor. The FOR may also be referred to as an "accessible swath" and the width of the field of regard referred to as accessible swath width. "Coverage" or "field of view" (FOV) is the area that the movable sensor perceives at a particular time instant, and is described in terms of "scenes". A "scene", as used herein, is defined as the "imaging swath width" (the width of the area on the surface of the Earth which is perceived by the sensor) by the "along track distance". At any moment in time a sensor can only collect data for the FOV which the sensor is pointed towards within the FOR of the sensor.

Within the ship detection system of the present disclosure, each sensor data collecting satellite has an accessible swath which overlaps, either partly or entirely, with the accessible swaths of every other sensor data collecting satellite in the plurality of satellites, such that there is an accessible swath on Earth which each satellite is capable of "imaging", where imaging is defined as collecting data (e.g., RF data, SAR data, AIS data, optical data) about the area.

A ground track, or suborbital path, may be defined as the path on the surface of the orbited body directly below a spacecraft's trajectory. That is, a ground track may be considered the vertical projection of the satellite's orbit onto the surface of the Earth. Different types of satellites have different FORs relative to the ground track. That is, some satellites have a FOR that is centered above the sub-satellite point (i.e. "nadir-looking") while other satellites have a FOR which is "side-looking" (i.e. off-nadir, switching from left looking to right looking or vice versa). Therefore, the different sensor data collecting satellites within the system may not have identical ground tracks, but are required to have FORs (i.e., accessible swaths) which at least partially overlap.

The configuration of an ISL relay layer in communication with leading and trailing satellites with overlapping accessible swaths allows for both global (or near global depending on the type of earth orbit) near real-time (NRT) tasking as well as global NRT downlink of information. The ISL relay layer includes a plurality of satellites that send and receive information to and from imaging satellites. An intersatellite link relay layer with a plurality of satellites may also be referred to as an ISL relay constellation.

A "trailing satellite" is a satellite which will pass over the Area of Interest (AOI) after the "leading satellite". A "trailing time" or "trailing interval" is the amount of time between the leading satellite passing over the location of interest and the trailing satellite passing over the location of interest. The trailing time may be, and preferably is, on the order of minutes.

Using the ISL relay layer to conduct cross-cueing operations enables short trailing times between the spacecraft in the ship detection system. "Cross-cueing" is the passing of detection, geolocation, and targeting information to another sensor, with minimal or no human intervention. Relaying commands and data through the ISL relay layer enables quick and efficient cross-cueing between a leading satellite and a trailing satellite which enables the short trailing time of the ship detection system. The area of overlap of the accessible swaths of the satellites is a cross-cueable overlap area wherein a leading satellite can cross-cue a trailing satellite to further image within said area.

The system leverages the unique characteristics of each satellite, including imaging swath width, image resolution, and/or the position of the FOV of each satellite (i.e., the satellite swath size and resolution of a trailing satellite may be the same as the leading satellite but the FOV may be pointed in a different direction) and connects them via an intersatellite link (ISL) data relay layer to allow automated or semi-automated cross-cueing between satellites that have overlapping accessible swaths. Cross-cueing is a process whereby an initial satellite sends a request to a second satellite to be "cued" to observe the same object as the initial satellite at a later time.

In general, the ship detection system of the present disclosure uses multiple imaging satellites with overlapping accessible swaths that have different accessible swath widths, and therefore, different imaging resolutions, to identify vessels of interest (VOIs) in an area of interest (AOI). However, within a system, satellites which have the same sensor types, swath widths, and resolutions may be used to "image" different FOVs at different times. That is, data collected by a leading satellite may, in some circumstances, necessitate a similar image size and quality be subsequently collected, but in a different or overlapping position, by a trailing satellite. For example, the leading satellite and trailing satellite may both be RF sensor satellites with the same accessible swath width and resolution, but the trailing RF sensor satellite may be tasked to collect data at a different location than the leading RF sensor satellite. Using multiple satellites of different modalities having overlapping accessible swaths all in contact with the ISL relay layer allows for improved revisit times, improved tasking and downlink latency by avoiding flight time to a ground station, and the capability to cross-cue between multiple satellites based on information received from the previous satellite.

As an example, in one embodiment, the imaging satellite constellation includes a first imaging satellite, a second imaging satellite, and a third imaging satellite, wherein the first, second, and third satellites have overlapping accessible swaths. The first imaging satellite collects sensor data having a first imaging swath width, and possibly a first resolution depending on the sensor type. For example, an RF collector satellite does not have a resolution. The second imaging satellite collects sensor data having a second imaging swath width and a second resolution, where the second imaging swath width is smaller than the first imaging swath width and the second resolution is higher than the first resolution, if there is a first resolution. The third imaging satellite collects sensor data having a third imaging swath width and a third resolution, where the third imaging swath width is smaller than the second imaging swath width and the third resolution is higher than the second resolution. In a particular embodiment, the three satellites include a broad area C-band SAR satellite, a high resolution X-band SAR satellite and a high resolution electro-optical satellite.

As noted above, in general, imaging swath width and resolution have an inverse correlation. That is, in most circumstances, in order to have a higher resolution a satellite must have a smaller imaging swath width. In general, "earlier" satellites within the series of satellites collecting data have a larger imaging swath width so that a VOI(s) (or other feature of interest) can be detected while "later" satellites within the series have higher resolution to better identify or characterize the VOI(s) which have been detected. However, in some circumstances, it may be necessary for a trailing satellite to have a similar imaging swath and resolution to the preceding leading satellite. Any satellite may be the trailing satellite, as long as said satellite has an overlapping accessible swath.

As discussed above, it is not a requirement of the system that each trailing satellite has a different sensor type, different imaging swath width, or different resolution compared to the leading satellite. However, every satellite must have an overlapping accessible swath. A trailing satellite may, in some embodiments, be the exact same type (or collect the same type of sensor data) of satellite as the leading satellite or the third satellite may be the same as the first satellite.

In another embodiment, described further below, four imaging satellites are used for ship detection. Each of the four imaging satellites uses a different modality or sensor type for data collection. Detection of VOIs is performed from largest imaging swath (and lowest resolution where applicable) imaging satellite to smallest imaging swath/highest resolution satellite, using a cross-cueing process. The first imaging satellite may be a radio frequency (RF) satellite with a broad area RF collection and an ISL to communicate with the ISL relay layer. The first imaging satellite may have a very broad imaging swath area, for example greater than 1 000km. Where the first imaging satellite is an RF satellite, there is no resolution (as RF data does not have a resolution per se but rather provide a geolocation of RF emitters on Earth). The second imaging satellite may be a broad area synthetic aperture radar (SAR) satellite with a SAR collector, an automatic identification system (AIS), and an ISL to communicate with the ISL relay layer. The second imaging satellite may have a broad imaging swath width that is less than that of the first satellite, for example greater than 450km with a low to medium imaging resolution, for example 25m to 50m, that is higher than the resolution of the first imaging satellite, where applicable. The third imaging satellite may be an X-band SAR satellite with a high resolution X-Band SAR collector and an ISL to communicate with the ISL relay layer. The third imaging satellite may have a medium to small imaging swath width that is less than that of the second satellite, for example greater than 30km with a high to very high imaging resolution, for example 0.25m to 3m, that is higher than the resolution of the second imaging satellite. The fourth imaging satellite may be an optical satellite with a high resolution optical collector and an ISL to communication with the ISL relay layer. The fourth imaging satellite may have a small imaging swath width that is less than that of the third satellite, for example greater than 5km with a very high imaging resolution, for example 0.5m,that is higher than the resolution of the third imaging satellite.

In the present disclosure, any imaging satellite which performs an imaging operation before a subsequent imaging satellite may be considered a "leading satellite" with respect to the subsequent satellite and the subsequent satellite may be considered a "trailing satellite" with respect to the prior satellite. That is, in an embodiment with four imaging satellites, the first imaging satellite may be considered a "leading satellite" with the second through fourth imaging satellites considered "trailing" satellites of the first imaging satellite. The second imaging satellite is considered a "leading satellite" relative to the third and fourth imaging satellites, which would be considered "trailing" satellites with respect to the second imaging satellite, and so on. The terms "leading" and "trailing" when used herein in reference to satellites are not intended to indicate any particular physical relationship between the leading and trailing satellites but rather refers to the fact that the trailing satellite is used to perform an imaging operation (i.e., acquisition of data) after and based on an imaging operation performed by a leading satellite.

Herein, "imaging", "imaging satellite", "imaging operation" and the like are meant to refer to the collection, by a sensor on a satellite, of data for an area of interest (AOI), and not specifically to the creation of an image. For example, in the case of an RF sensor satellite, the imaging operation is collection of RF data, by an RF sensor satellite for the AOI, that detects and geolocates RF emitting sources.

In some cases, the trailing satellite may be considered to physically trail the leading satellite by a period of time (e.g., ten minutes). The period of time may be termed a "trailing interval" or "trailing time". The trailing interval defines a time period between the leading satellite passing over a location (i.e., the location is within the satellite's FOR) and the trailing satellite passing over the same location (i.e., such that the same location, or approximately the same location, can be imaged by both satellites). In such cases, the leading satellite acquires image data at a location first and the trailing satellite acquires image data at approximately the same location (depending on whether a subject being imaged is static or in motion or if the subject was fully captured in the previous image) second. As a result, the system is generally configured to perform certain processing and communication steps, such as those performed by the intersatellite link relay layer described herein, within the trailing interval.

Each of the imaging satellites receives tasking commands through the ISL relay layer (i.e., indirectly from the ordering system or the preceding satellite) and sends relevant data back to the ISL relay layer. The tasking commands of a trailing satellite are modified based on the data collected by the preceding (leading) satellite. For example, the tasking commands sent to the second imaging satellite are determined, at least in part, based on the data collected by the first imaging satellite via the ISL relay layer.

In an embodiment, an initial order for ship detection may be received from an end user who is either in-theatre or not in-theatre. The order is received at the ISL relay layer and sent to an associated ground segment mission planning system. The ground segment may also include: an ordering system, a spacecraft control system, and a data chain system. The ground segment may be cloud-based. The mission planning system creates tasking commands based on the order and sends the tasking commands to the ISL relay layer to be transmitted to the first imaging satellite. As each imaging satellite sends collected data to the ISL relay layer, the ISL relay layer downlinks the relevant data to an end user. The end user may or may not be the same as the original end user and may or may not be in-theatre.

In some embodiments, there may be more or fewer than four imaging satellites used within the detection system and one or more imaging satellites within the detection system may not be employed for a specific ship detection order. Accordingly, in some embodiments, the system may include a constellation of imaging satellites and only use a subset of the available imaging satellites for an execution of a given task. The initial order may include tasks for a plurality of satellites or may only task a first satellite with a second satellite being tasked based on the information collected from the first satellite.

The ship detection system may leverage recent developments in intersatellite link technology, primary Optical Intersatellite Link (OISL) terminals, and the emergence of OISL-compatible data relay communication constellations. In general, existing systems are not able to task from in-theatre, process (on-board), cross-cue another asset, and downlink intelligence products to the same (or different) in-theatre user, particularly not in any low-latency or automated manner. The systems of the present disclosure may provide for reduced trailing time and cross-cue tasking latency. The probability of imaging and characterizing a particular VOI is higher when the trailing time and cross-cue tasking latency between satellites is very low as the VOI will have less time to travel between image acquisitions. In addition, custody can be kept of faster moving VOIs when the cross-cue latency is low.

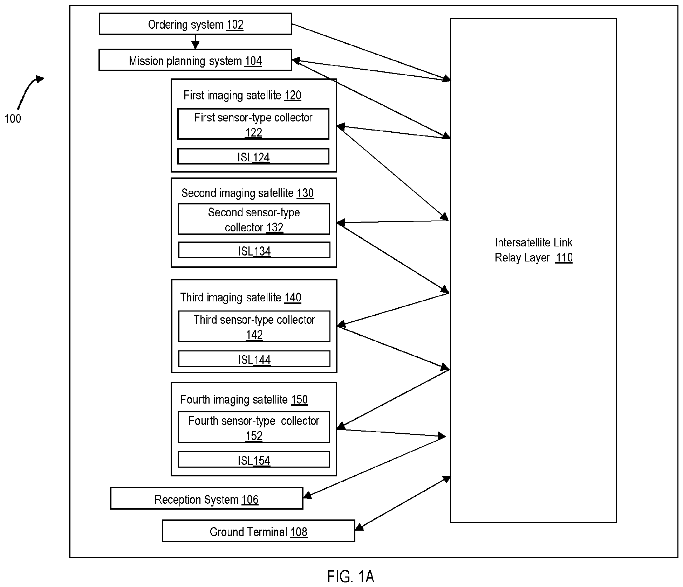

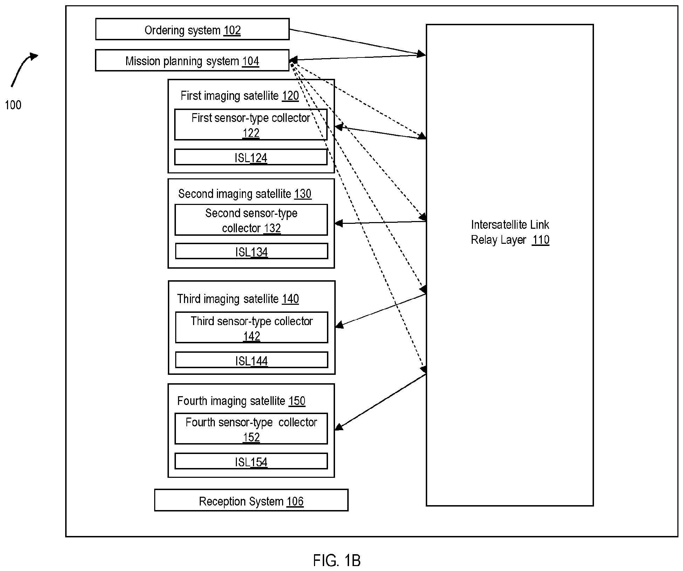

Referring now to Figure 1A, shown therein is a block diagram of a ship detection system 100, including a plurality of different modality (i.e., different sensor type) satellites having overlapping accessible swaths, for ship detection of vessels of interest in an area of interest, according to an embodiment. Figure 1A illustrates a simplified version of the entire process, while variations of certain steps are illustrated and discussed in Figures 1B-1D.

System 100 includes an ordering system 102, a mission planning system 104, a reception system 106, an intersatellite link relay layer (ISL relay layer) 110, a first imaging satellite 120, a second imaging satellite 130, a third imaging satellite 140, and a fourth imaging satellite 150. While Figure 1A and system 100 include only four satellites (with different sensor types, imaging swath widths, and resolutions, where applicable, as described below) it is to be understood that the number of imaging satellites available to be tasked in system 100 may likely be greater than four. Additionally, subsets of the imaging satellites available to be tasked may have the same sensor type, imaging swath widths, and resolutions, where applicable, but be at different locations along the ground track such that, for example, an optical sensor satellite is trailing another optical satellite.

The ISL relay layer 110 includes a plurality of satellites in Earth orbit. Satellites of the ISL relay layer 110 may be in low earth orbit (LEO), medium earth orbit (MEO), or geostationary orbit (GEO). The ISL relay layer may include, for example, up to hundreds or thousands of satellites. In some embodiments, all of the relay satellites may be in the same orbit (e.g., all satellites in GEO). In some embodiments, there may be relay satellites in different orbits (e.g., some satellites in LEO and some in MEO). In some embodiments, the same satellite may be used for more than one step or multiple satellites may be used for a single step. For example, when an order is received by a relay satellite in the ISL relay layer, the order may "hop" between several different satellites within the ISL relay layer before being sent to the mission planning system 104.

First imaging satellite 120 includes a first sensor type collector 122 and an ISL 124.

Second imaging satellite 130 includes a second sensor type collector 132 and an ISL 134.

Third imaging satellite 140 includes a third sensor type collector 142 and an ISL 144.

Fourth imaging satellite 150 includes a fourth sensor type collector 152 and an ISL 154.

In an embodiment, the first sensor type collector 122 is an RF sensor which collects RF geolocation data and the imaging swath width of the first sensor type collector 122 is greater than the imaging swath width of the second sensor type collector 132. An RF satellite provides location information of RF emitters from vessels. The data collected by the first sensor type collector 122 is used to inform the collection of data by the second sensor type collector 132. In some circumstances, the data collected from the first sensor type collector (when an RF sensor) may not inform the data collection of the second sensor type collector 132 as dark vessels may not broadcast RF emitters.

The resolution of the second sensor type collector 132 is less than the resolution of the third sensor type collector 142 and the imaging swath width of the second sensor type collector 132 is greater than the imaging of the third sensor type collector 142. In some embodiments, the resolution of the third sensor type collector 142 is less than the resolution of the fourth sensor type collector 152 and the imaging swath width of the third sensor type collector 142 is greater than the imaging swath width of the fourth sensor type collector 152. However, in other embodiments the resolution of the fourth sensor type collector 152 may not be greater than the third sensor type collector 142 but may instead provide color images or other image details which were not collected by or collectable by the third sensor type collector 142. For example, in some embodiments the third sensor type collector 142 may have a resolution of 3m and the fourth sensor type collector may have a resolution of 0.5m, while in other embodiments the third sensor type collector 142 may have a resolution of 0.25m while the fourth sensor type collector 142 has a resolution of 0.5m.

In the embodiment of Figure 1A, each of the four satellites uses a different imaging modality and/or a different sensor type (e.g., different imaging frequency) to collect data, but in other embodiments the same imaging modality or sensor type may be used by at least two of the tasked imaging satellites.

In other embodiments there may be less than four imaging satellites or more than four imaging satellites.

In general, an imaging satellite with a greater imaging swath width performs data collection before a subsequent imaging satellite with a smaller imaging swath width. In some circumstances, for example when a FOV of an AOI needs to be adjusted within the FOR based on already collected data, a trailing satellite may have the same imaging swath width as the directly preceding leading satellite.

In general, the imaging swath widths and resolutions used may be selected from those particularly well suited to maritime surveillance applications.

During operation of system 100 in Figure 1A, an order is created by the ordering system 102 and the ordering system 102 sends the order to the ISL relay layer 110, i.e., a satellite within the ISL relay layer 110. The order may be generated based on input data provided by a user via a user interface.

Ordering system 102 allows a user to describe requirements for acquisition and downlink of data from ship detection system 100 and/or for generation of one or more products via creation and submission of orders at a human machine interface (HMI). In some embodiments, ordering system 102 may also be the system which delivers the data or products to the client.

The ISL relay layer 110 sends the order to the mission planning system 104. The mission planning system 104 processes the received order and generates one or more tasking commands. The tasking commands are sent by the mission planning system 104 to the ISL relay layer 110 layer 110, i.e., a satellite within the ISL relay layer 110 which may or may not be the same satellite which receive the order from the ordering system 102.

In other embodiments, the ordering system 102 may send the order directly to the mission planning system 104 (arrow between ordering system 102 and mission planning system 104).

Mission planning system 104 may plan all of the activities for the satellites within the ISL relay layer 110. These activities may include image acquisitions, data downlinks or relays, and/or spacecraft (e.g., satellite) maintenance activities. Maintenance activity requests are sent to the mission planning system 104 from a spacecraft control system (not shown).

The spacecraft control system is responsible for maintaining functionality and safe operation of the satellite in the ISL relay layer 110, executing the satellite activities provided by the mission planning system, providing orbit determination, prediction, and maintenance functionality, and providing offline analysis to support long-term monitoring of operation of the satellites.

The ISL relay layer 110 sends tasking commands to the first imaging satellite 120, where the first sensor type collector 122 collects sensor data based on the received tasking data.

In some embodiments, the first imaging satellite 120 sends the collected sensor data to the ISL relay layer 110 via ISL 124 to be relayed to a ground terminal 108 for processing, with processed collected sensor data then being returned to the ISL relay layer 110. In some embodiments, the collected sensor data is processed by the first imaging satellite 120. The ISL relay layer 110 relays tasking commands and, in some circumstances, processed collected sensor data to the second imaging satellite 130. The ISL relay layer 110 sends tasking commands (which may or may not have been modified based off of the data collected and sent by the first imaging satellite 120), and possibly the collected sensor data, for a subsequent imaging operation to second imaging satellite 130.

The second imaging satellite 130 receives the tasking commands from the ISL relay layer 110 and uses the second sensor type collector 132 to collect sensor data based on the tasking commands. The second imaging satellite 130 sends the collected sensor data to the ISL relay layer 110 via ISL 134.

In some embodiments, the second imaging satellite 130 sends the collected sensor data to the ISL relay layer 110 via ISL 134 to be relayed to a ground terminal 108 for processing, with processed collected sensor data then being returned to the ISL relay layer 110. In some embodiments, the collected sensor data is processed by the second imaging satellite 130. In all embodiments, the ISL relay layer 110 relays tasking commands and, in some circumstances, processed collected sensor data to the third imaging satellite 140.

The ISL relay layer 110sends tasking commands (which may or may not have been modified based off of the data collected by the first and second imaging satellites) and possibly the collected sensor data, for a subsequent imaging operation to the third imaging satellite 140.

The third imaging satellite 140 uses third sensor type collector 142 to collect sensor data based on the tasking commands. The third imaging satellite 140 sends the collected sensor data to the ISL relay layer 110via ISL 144.

The ISL relay layer 110sends tasking commands (which may or may not have been modified based off of the data collected by the first, second, and third imaging satellites) , and possibly the collected sensor data, to the fourth imaging satellite 150.

The fourth imaging satellite 150 uses fourth sensor type collector 152 to collect sensor data based on the tasking commands. The fourth imaging satellite 150 sends the collected sensor data to the ISL relay layer 110via ISL 154.

In some embodiments, the third imaging satellite 140 sends the collected sensor data to the ISL relay layer 110via ISL 144 to be relayed to a ground terminal 108 for processing, with processed collected sensor data then being returned to the ISL relay layer 110. In some embodiments, the collected sensor data is processed by the third imaging satellite 140. The ISL relay layer 110 relays tasking commands, and in some circumstances, processed collected sensor data to the fourth imaging satellite 150.

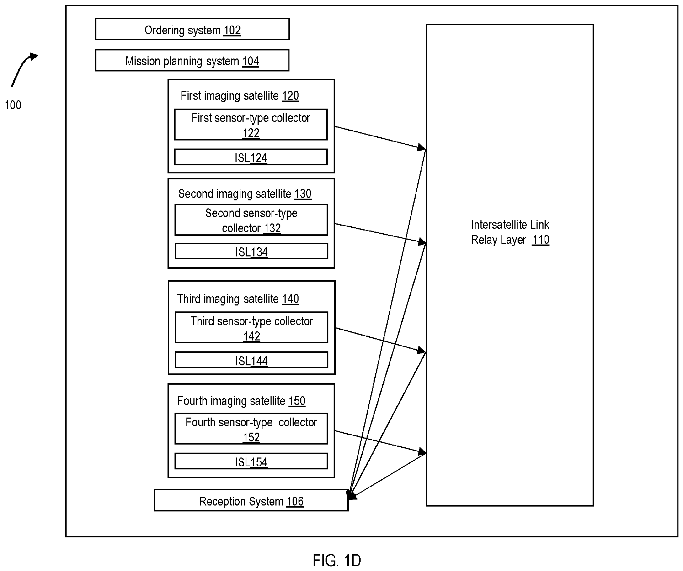

The ISL relay layer 110sends data to the reception system 106. The reception system 106 is configured to output the received data, such as via a display device displaying a graphical user interface. In the embodiment of Figure 1A, data is sent to the reception system after all data has been collected by the ISL relay layer 110. In a preferred embodiment, data is sent to the reception system from the ISL relay layer 110 as soon as it is collected from an imaging satellite (see Figure 1D), particularly if the collected data includes VOIs.

When data is sent from each imaging satellite to the corresponding relay satellite and then from the relay satellite to the next imaging satellite this represents a cross-cueing operation. Cross-cueing includes the passing of detection, geolocation, and targeting information directly to another sensor. In general, each subsequent data collection at an imaging satellite represents a progressively narrower imaging swath allowing the ship detection system to narrow in on specific VOIs and provide greater understanding of vessel characterization and behavior.

Figures 1B-1D illustrate different implementations of various steps described above for Figure 1A, according to embodiments. System 100 in Figures 1B-1D is identical to system 100 in Figure 1A. The ISL relay layer 110 represents a plurality of satellites. As discussed above, multiple satellites within the ISL relay layer 110 may be used for a single task or a single satellite may be used for multiple tasks. Figures 1B-D do not call out specific satellites to illustrate this point.

Figure 1B shows a variation of the ordering and pre-planning steps during operation of the ship detection system 100. In Figure 1B, tasking commands (dashed arrows) are sent directly to the ISL relay layer 110 from the mission planning system 104 for each of the imaging satellites 120, 130, 140, 150. The ISL relay layer 110 sends the tasking commands to imaging satellites 120, 130, 140, and 150 (solid line arrows). That is, the mission planning system 104 can task any imaging satellite for a collection at any time and therefore the transfer of tasking commands from a leading satellite to a trailing satellite is not necessary. The mission planning system 104 may task each satellite to "look" in a specific direction within the FOR of the satellite and during a collection event final imaging coordinates, possibly corresponding to a VOI(s) location as determined by a leading satellite, are sent through the ISL relay layer 110 by a leading satellite to the appropriate trailing satellite.

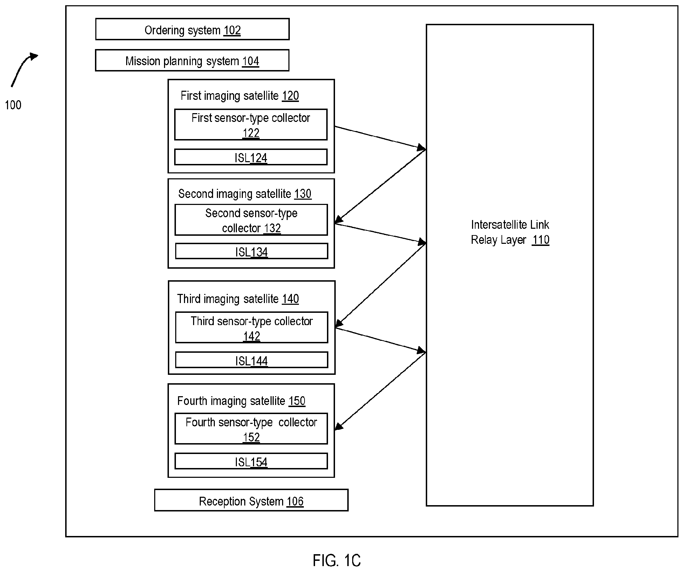

Figure 1C shows the transmission of VOI coordinates between imaging satellites during operation of the ship detection system 100. As discussed above for Figure 1B, imaging coordinates corresponding to a VOI are sent from each satellite to the subsequent satellite through the ISL relay layer 110. In Figure 1C, VOI coordinates are sent through the ISL relay layer 110 from satellite 120 to satellite 130, from satellite 130 to satellite 140, and from satellite 140 to satellite 150. That is, once a leading satellite sensor has processed data/an image onboard, the VOI coordinates are calculated for the trailing sensor to image and those coordinates are sent through the ISL relay layer 110.

Figure 1D shows transmission of data to the reception system 106 during operation of the ship detection system 100. As discussed above, it is preferred that data, such as images, VOI detection and coordinates, be sent to the reception system 106 as soon as the data becomes available. In Figure 1D, collected data from the satellites 120, 130, 140, and 150 are sent to the ISL relay layer 110 and then directly sent to the reception system 106.

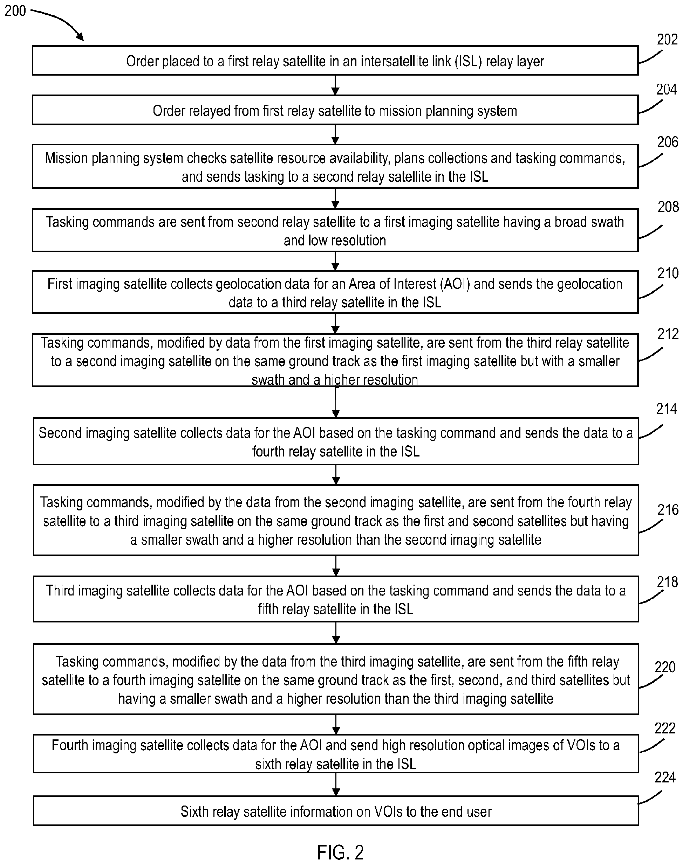

Referring now to Figure 2, shown therein is a flow diagram of a method 200 of detecting vessels of interest via satellite imaging using the system 100 of Figures 1A-D, according to an embodiment.

At 202, an order is generated at the ordering system 102 and sent from the ordering system 102 to a satellite in the ISL relay layer 110. The ordering system 102 may be in-theatre (e.g., ships at sea) or out of theatre (e.g., not at sea).

In some embodiments, the order may be sent directly to a mission planning system (see 204 below). For example, a ship at sea would likely need to send an order through the ISL relay layer 110, while an order placed from a facility with access to an online order desk would go directly to the mission planning system.

The order may specify an area of interest ("AOI") where data collection is to take place. The AOI may be a defined area polygon or individual collection swaths. The order may specify a date range or time range. The order may specify an order priority. For example, if there are multiple orders pending, the order priority may specify which take precedence. For the SAR sensors, the order may specify one or more desired beam modes. The order may specify one or more sensor types or modalities from which data is to be collected and received. Sensor types that may be specified in an order may include, for example and without limitation, RF sensing, C-band SAR sensing, AIS, X-band SAR, optical, etc. The order may specify at least one delivery destination. The delivery destination specifies a device to which the collected or processed data is to be sent. The ordering system 102 may be configured to generate and display a user interface through which a user may select various order parameters to define order content. The ordering system 102 may enable the user to choose various parameters based on specific provided criteria such as choosing the AOI based on a date range ("swath-based ordering").

At 204, the ISL relay layer sends the order to the mission planning system 104.

In some embodiments, the mission planning system 104 may receive the order directly from the ordering system 102.

The ISL relay layer 110 provides continuous connectivity between the ordering system 102 and the mission planning system 104. Therefore, the order can be placed from any global end user location.

The order may be received at a reception station and then sent to a cloud-based mission planning system which is part of a ground segment associated with the ship detection system 100. The order may be received at a downlink reception station antenna for a cloud-based ground segment. The ground segment may also include an ordering system, a spacecraft control system, and a data chain system. The ordering system, spacecraft control system, and data chain system may be in different locations and may be cloud-based.

As discussed above, the ordering system may include a human machine interface for a user to input requirements for acquisition and downlink of data or for generation of products in order to create and submit orders to the mission planning system 104.

As discussed above, the spacecraft control system may be responsible for maintaining functionality and safe operation of the satellite in the ISL relay layer 110, executing the satellite activities provided by the mission planning system, providing orbit determination, prediction, and maintenance functionality, and providing offline analysis to support long-term monitoring of operation of the satellites. The spacecraft control system may send maintenance requests to the mission planning system 104.

The data chain subsystem may be responsible for receiving image data from at least one ground terminal and reconstructing the image data into raw data which is processed into products, such as image products, information products, and non-imaging calibration products.

The order received at the mission planning system 104 may be identical to the order generated at and sent by the ordering system 102.

At 206, the mission planning system 104 checks availability of satellites for each sensor type within the system and plans the data collections and spacecraft tasking commands. The type and number of tasking commands depends on the order content and the numbers of sensors (different imaging satellites) required by the order. Although four imaging satellites are described in the embodiment of Figure 1, as few as two different imaging satellites, as well as three or more than four, could be employed as necessary.

The mission planning system 104 sends the tasking commands to the ISL relay layer 110.

At 208, the ISL relay layer 110 sends tasking commands to the first imaging satellite 120 via ISL link 124. The first imaging satellite 120 has a first sensor type collector 122 for collecting first sensor data. The first sensor type collector 122 has a broad imaging swath.

At 210, the first sensor type collector 122 of the first imaging satellite 120 collects the first sensor data defined by the tasking commands. The collected first sensor data may be geolocation data for the AOI specified in the order. The geolocation data may be collected from a marine emitter. The marine emitters may be any of S-band marine radar, X-band marine radar, L-band comms, UHF comms, or VHF comms emitters. In some embodiments, some of the emitters may be classified as emitters of interest (EOIs) to be imaged by sensors of other sensor type satellites in the ship detection system.

The imaging swath width of the first imaging satellite 120 is the broadest imaging swath of the imaging satellites and may be greater than 1000km.

The first imaging satellite 120 sends the collected data to the ISL relay layer 110 via ISL 124.

At 212, the ISL relay layer 110 sends tasking commands, and possibly sensor data collected by the first imaging satellite 120, to the second imaging satellite 130 via ISL link 134.

The tasking commands may be modified from the original tasking commands created by the mission planning system 104 based on the data that was collected by the first imaging satellite. That is, after the first imaging satellite 120 collects image data the image data is processed onboard the first imaging satellite 120 for vessel detection, and the tasking command for the second imaging satellite 130 is modified to include detected VOI coordinates. As discussed above, the second imaging satellite 130 may have already received a tasking command directly from the mission planning system 104, such that the second imaging satellite 130 is pointed in the general direction of the AOI within the FOR of the second imaging satellite 130. The modified tasking command may then adjust the specific FOV of the second imaging satellite 130.

In some embodiments, the sensor data collected by the first imaging satellite 120 is also sent from the ISL relay layer 110 to an end user as soon as possible.

At 214, the second sensor type collector 132 of the second imaging satellite 130 collects the data required by the tasking commands. The required data may be C-band SAR imagery of VOIs within the AOI. The required data may be automatic identification system (AIS) data. The imaging swath width of the second imaging satellite 130 is smaller than the imaging swath of the first imaging satellite and may be greater than 500km. Where applicable, i.e., where the first imaging satellite has a resolution, the resolution of the second imaging satellite 130 is higher than the first imaging satellite.

The second imaging satellite 130 sends the collected data to the ISL relay layer 110via ISL 134.

At 216, the ISL relay layer 110sends tasking commands, and possibly sensor data collected by the second imaging satellite 130, to the third imaging satellite 140 via ISL link 144. The tasking commands may be modified from the original tasking commands created by the mission planning system 104 based on the data that was collected by the first and/or second imaging satellites 120, 130.

In some embodiments, the sensor data collected by the second imaging satellite 130 is also sent from the ISL relay layer 110 to an end user as soon as possible.

At 218, the third sensor type collector 142 of the third imaging satellite 140 collects the data required by the tasking commands. The required data may be High Res X-band SAR data. The imaging swath width of the third imaging satellite 140 is smaller than the imaging swath of the second imaging satellite and may be greater than 30km. The resolution of the third imaging satellite 140 is higher than the second imaging satellite.

The third imaging satellite 140 sends the collected data to the ISL relay layer 110via ISL 144.

At 220, the ISL relay layer 110sends tasking commands, and possibly sensor data collected by the third imaging satellite 140, to the fourth imaging satellite 150 via ISL link 154.

The tasking commands may be modified from the original tasking commands created by the mission planning system 104 based on the data that was collected by the first, second, and/or third imaging satellites.

In some embodiments, the sensor data collected by the third imaging satellite 140 is also sent from the ISL relay layer 110 to an end user as soon as possible.

At 222, the fourth sensor type collector 152 of the fourth imaging satellite 150 collects the data required by the tasking commands. The required data may be high resolution optical images of at least one VOI collected by a High Res optical collector. The imaging swath width of the fourth imaging satellite 150 is smaller than the imaging swath of the third imaging satellite and may be greater than 5km. The resolution of the fourth imaging satellite 150 is higher than the third imaging satellite.

The fourth imaging satellite 150 sends the collected data to the ISL relay layer 110via ISL 154.

At 224, the ISL relay layer 110 sends the information gathered from all four imaging satellites to an end user device associated with an end user. The end user device may be in-theatre or out of theatre. In other embodiments, as described above, the information gathered by each imaging satellite is sent to the end user as soon as the information is available.

As discussed above, a trailing satellite does not always have a smaller imaging swath and higher resolution than a leading satellite, and the above embodiment is merely an example.

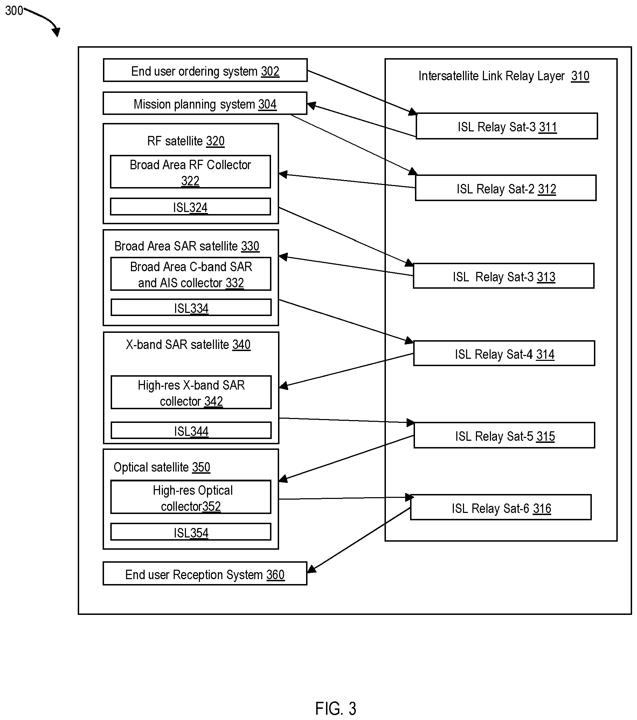

Referring now to Figure 3, shown therein is a block diagram of a ship detection system 300, according to an embodiment. System 300 may be an embodiment of the system 100 of Figure 1.

System 300 includes an end user ordering system 302, a mission planning system 304, an end user reception system 306, an intersatellite link relay constellation (ISL relay constellation) 310, a RF satellite 320, a broad area C-band SAR satellite 330, a high resolution X-band SAR satellite 340 , and an optical satellite 350.

The ISL relay constellation 310 is in Earth orbit. The ISL relay constellation 310 may be in low earth orbit (LEO), medium earth orbit (MEO), or geostationary orbit (GEO). The ISL relay constellation 310 includes a plurality of relay satellites, a subset of which is shown in Figure 3 as satellites 311, 312, 313, 314, 315, and 316. In actuality the number of relay satellite in the ISL relay constellation 310 may be in the hundreds or greater. A single relay satellite may be used for multiple steps during a ship detection or multiple relay satellites may be used for a single step of a ship detection. For example, when an order generated at end user ordering system 302 is received by a relay satellite in the ISL relay constellation 310, the order may "hop" between several different satellites within the ISL relay constellation 310 before being sent to the mission planning system 304.

RF satellite 320 includes a broad area RF collector 322 for collecting RF data and an ISL 324.

Broad area SAR satellite 330 includes a broad area C-band SAR and AIS collector 332 for collecting C-band SAR data and an ISL 334.

Next gen X-band SAR satellite 340 includes a high-res X-band SAR collector 342 for collecting X-band SAR data and an ISL 344.

Optical satellite 350 includes a high-res optical collector 352 for collecting high-resolution optical images and an ISL 354.

The imaging swath width of the RF satellite 320 is greater than the imaging swath width of the broad area SAR satellite 330.

The resolution of the broad area SAR satellite 330 is less than the resolution of the next gen X-band SAR satellite 340 and the imaging swath width of the broad area SAR satellite 330 is greater than the imaging swath width of the next gen X-band SAR satellite 340.

The resolution of the next gen X-band SAR satellite 340 is less than the resolution of the optical satellite 350 and the imaging swath width of the next gen X-band SAR satellite 340 is greater than the imaging swath width of the optical satellite 350.

In some embodiments there may be fewer than four imaging satellites or more than four imaging satellites.

Broadly, during operation of system 300, an order is created by the operating system 302 in response to receiving a user input and sent to the ISL relay satellite 311. Relay satellite 311 sends the order to the mission planning system 304 where the order is used to create tasking commands for the imaging satellites. The tasking commands are sent directly to imaging satellites 320, 330, 340, and 350 through relay satellites 312, 313, 314, and 315, respectively to initially task the imaging satellites. The initial tasking commands imaging satellites 320, 330, 340, and 350 to point in the same general direction and may include exact coordinates for imaging. Relay satellite 312 sends tasking commands to the RF satellite 320 where the broad area RF collector 322 collects the required data and sends the data to relay satellite 313 via ISL 324. Relay satellite 313 sends tasking commands (which may or may not have been modified based off of the data collected and sent by the RF satellite 320, wherein, for example, the modification would change the imaging coordinates of the initial tasking) to broad area SAR satellite 330. The broad area C-band SAR and AIS collector 332 collects the required data and the data is sent to relay satellite 314 via ISL 334. Relay satellite 314 sends tasking commands (which may or may not have been modified based off of the data collected by the first and Class C-V SAR satellites) to the next gen X-band SAR satellite 340. The high resolution X-band SAR collector 342 collects the required data and the data is sent to relay satellite 315 via ISL 344. Relay satellite 315 sends tasking commands (which may or may not have been modified based off of the data collected by the first, second, and next gen X-band SAR satellites) to the optical satellite 350. The high resolution optical collector 352 collects the required data and the data is sent to relay satellite 316 via ISL 354. Relay satellite 316 sends data to the reception system 306 to be received by the end user.

When data is sent from each leading imaging satellite to the relevant relay satellite then to the trailing satellite, this represents a cross-cueing operation. Cross-cueing includes the passing of detection, geolocation, and targeting information directly to another sensor. In general, but not always, as data collection with the ship detection operation progresses the imaging swath width narrows, allowing the ship detection system to narrow in on specific VOIs.

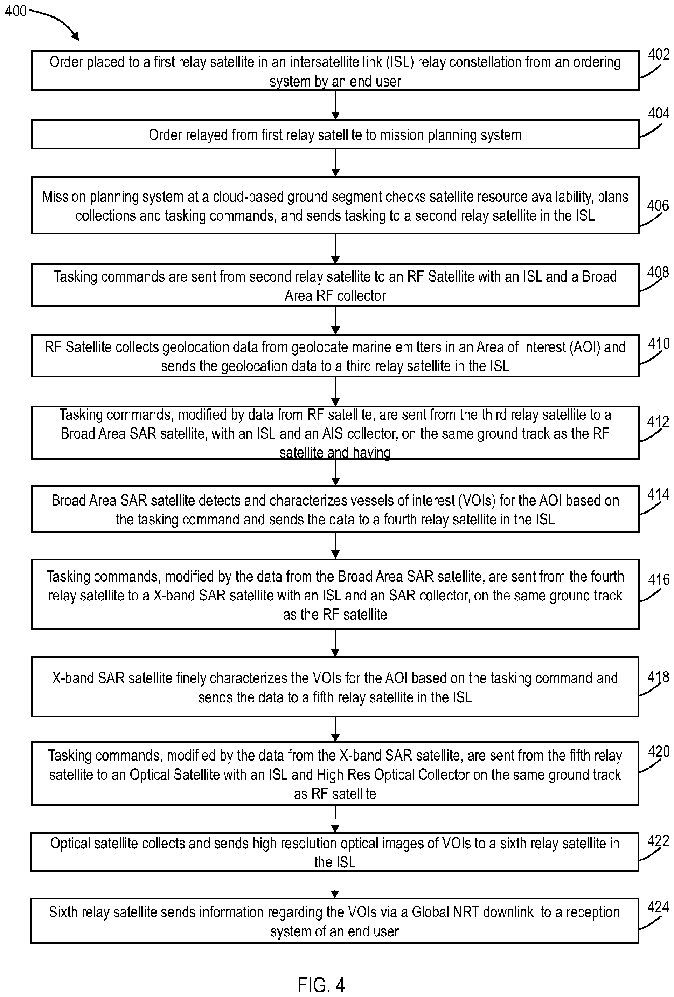

Referring now to Figure 4, shown therein is a flow diagram of method 400 of ship detection using the system 300 of Figure 3, according to an embodiment.

At 402, an order is generated at the ordering system 302 in response to an end user input specifying details of the order. The order is sent by the ordering system 302 to the first relay satellite 311 in the ISL relay constellation 310.

The end user may be in-theatre, for example, aboard a Five Eyes (FVEY) vessel which may be requesting information regarding VOIs in an area of interest they will be venturing to imminently. The ordering system 302 may be out of theatre, for example, implemented at an intelligence agency on land where a user may use the ordering system 302 to request information about VOIs.

The order may include various information. Information in the order (and which may be selected to specified by a user, for example, through input to a user interface) may include, for example, an area of interest (AOI) where the data collection is to take place (e.g., a defined are polygon, or individual collection swaths). The order may include a date range (or time range). The order may include an order priority (e.g., if there are multiple orders pending which takes precedence). The order may include one or more desired modes. The order may specify which sensor types to receive data from (e.g., RF sensing, C-band SAR sensing, AIS, X-band SAR, optical, etc.). The order may include at least one delivery destination for the collected data to be sent to. The ordering system 302 may enable the user to choose various parameters based on specific provided criteria such as choosing the AOI based on a date range ("swath-based ordering").

At 404, the relay satellite 311 sends the order to the mission planning system 304.

The ISL relay constellation 310 provides continuous connectivity between the ordering system 302 and the mission planning system 304. Therefore, the order can be placed from any global end user location. The order may be received at a reception station and then sent to a cloud-based mission planning system which is part of the ground segment associated with the ship detection system 300. The order may be received at a downlink reception station antenna for a cloud-based ground segment. The antenna may be known in advance based on the order information or the end user.

The order received at the mission planning system 304 may be identical to the order generated at and sent by the ordering system 302.

At 406, the mission planning system checks the availability of satellites for each sensor type within the system and plans the data collections and satellite tasking commands. In the embodiment of Figures 3 and 4, the available satellite sensor types are RF, C-Band SAR, X-band SAR, and High-Res Optical. In the systems and methods of the present disclosure, the type and number of tasking commands depends on the nature of the order and the number of sensors (different imaging satellites) required and/or available.

The mission planning system 304 sends the tasking commands to relay satellite 312. Because the ship detection system 300 employs an ISL constellation in LEO, MEO, or GEO, near real time (NRT) tasking of the satellites can be achieved. The initial tasking command is for the RF satellite 320.

At 408, the relay satellite 312 sends tasking commands to the RF satellite 320 via ISL link 324. In some embodiments, the RF satellite may be a single satellite, while in other embodiments a cluster of RF satellites may be used.

At 410, the broad area RF collector 322 of the RF satellite 320 collects the data based on the tasking commands. The RF collector 322 collects RF data from the AOI. The RF data may be processed onboard the RF satellite 320 or may be sent to the ground via the ISL constellation 310 for processing. The processed RF data shows geolocation information for marine emitters. The marine emitters may be, for example, any of S-band marine radar, X-band marine radar, L-band comms, UHF comms, or VHF comms emitters.

In some embodiments, some of the emitters may be classified as emitters of interest (EOIs) to be imaged by sensors of other sensor type satellites in the ship detection system. The EOIs may be classified as such via human intervention wherein the data is sent to the ground via an ISL (or may already be at the ground if that is where processing of the RF data is performed) or the EOIs may be classified automatically based on end user-selected criteria (e.g., all X-band marine radar emitters within X kilometers of a defined coast or land mass).

The imaging swath width of the RF satellite 320 is the broadest imaging swath of the imaging satellites and may be greater than 1000km. The RF satellite 320 does not have a resolution.

At 412, the relay satellite 313 relays tasking commands to the broad area SAR satellite 330 via ISL link 334. The specific broad area SAR satellite chosen for the task has an overlapping accessible swath with the RF satellite and trailing behind the RF satellite 320. The tasking commands may be modified from the original tasking commands created by the mission planning system based on the data that was collected by the RF satellite. For example, the AOI may change based on the geolocations of the EOIs, and the imaging swath that is imaged by the broad area SAR satellite 330 may be smaller (or larger) than requested by the initial order, the beam mode position of the broad area SAR satellite 330 may be changed.

If a vessel which was expected to be in a specific location was not detected by the RF satellite 320, the broad area SAR satellite may image the same location to confirm that the vessel is not in the location or to show that the vessel is in the expected location but was not emitting an RF signal.

At 414, the broad area C-band SAR and AIS collector 332 of the broad area SAR satellite 330 collects the data required by the tasking commands. The required data is images of the AOI collected by the broad area C-band collector and may also be AIS information collected by the AIS collector. As with the RF satellite 320, the collected data may be processed onboard the broad area SAR satellite 330 or may be sent to a ground terminal for processing via the ISL constellation 310.

The output of processing the data is vessel detection reports. A vessel detection report may include any one or more of a position of ships detected in the SAR image(s), an estimated size, heading, and velocity of detected ships, a correlation to the AIS data if the vessel was transmitting (a ship not transmitting AIS could be classified or labelled as a "dark target"), "image chips" of the detected ships, and classification or categorization of vessels as VOIs. The characterization, filtering, prioritization, and location prediction of VOIs may be assisted by artificial intelligence (AI) or machine learning (ML) models.

Classification of a ship as a VOI may warrant further imaging of the VOI by the next satellite(s) in the ship detection system. In the embodiment of Figures 3 and 4, the next satellite is the next gen X-band SAR satellite 340. As with the classification of EOIs, the classification of VOIs may be done via human intervention on the ground, or in an automated manner (e.g., all dark targets with X kilometers of a defined land mass are VOIs) onboard the broad area SAR satellite 330.

The imaging swath width of the broad area SAR satellite 330 is smaller than the imaging swath of the RF satellite. The imaging swath of the broad area SAR satellite 330 may be greater than 450km.

At 416, the relay satellite 314 sends tasking commands to the next gen X-band SAR satellite 340 via ISL link 344. The specific next gen X-band SAR satellite 340 selected for the task has an overlapping accessible swath with the RF satellite 320 and the broad area SAR satellite 330 and trailing behind the broad area SAR satellite 330. The tasking commands may be modified from the original tasking commands created by the mission planning system 304 based on the data that was collected by the RF satellite(s) 320 and/or broad area SAR satellite 330. For example, the particular swath and beam mode position may be altered based on the specific latitudinal and longitudinal positions of VOIs as identified by the broad area SAR satellite.

If a vessel which was expected to be in a specific location was not detected by the broad area SAR satellite 330, the next gen X-Band SAR satellite 340 may image the same location to confirm that the vessel is not in the location or to show that the vessel is in the expected location but was not emitting an RF signal or an AIS signal.

At 418, the high-res X-band SAR collector 342 of the next gen X-band SAR satellite 340 collects the high resolution X-band SAR data required by the tasking commands. The collected data may be processed onboard the next gen X-band SAR satellite 340 or may be sent to the ground via the ISL constellation 310 for processing.

The output of processing the data is a vessel detection report. The vessel detection report may include the position of ships detected in the SAR image(s). The vessel detection report may include estimated size, heading, and velocity of detected ships. The vessel detection report may include correlation to the AIS image if one was collected (a ship not transmitting AIS could be classified as a "dark target"). The vessel detection report may include "image chips" of the detected ships. The vessel detection report may include classification of ships as VOIs. Although the information is similar to that generated by the Class C-V SAR satellite, the resolution of the data is higher. Additional vessels may be classified as VOIs based off of the information in the same manner as above.

The imaging swath width of the next gen X-band SAR satellite 340 is smaller than the imaging swath of the broad area SAR satellite. The imaging swath may be greater than 30km. The resolution of the next gen X-band SAR satellite 340 is higher than the broad area SAR satellite.

At 420, the relay satellite 315 sends tasking commands to the optical satellite 350 via ISL link 354.

The specific optical satellite 350 selected for the task has an overlapping accessible swath with the RF satellite, the broad area SAR satellite, and the next gen X-band SAR satellite, and trailing directly behind the next gen X-band SAR satellite (in the constellation).

The tasking commands may be modified from the original tasking commands created by the mission planning system 304 based on the data that was collected by the RF satellite, broad area SAR satellite, and/or next gen X-band SAR satellites. For example, the angle of capture within a field-of-regard of the optical satellite 350 may be altered based on specific latitudinal and longitudinal positions of VOIs as identified by the broad area SAR satellite and the next gen X-band SAR satellite.

At 422, the high resolution optical collector 352 of the optical satellite 350 collects high resolution optical data required by the tasking commands. The high resolution optical data includes at least one high resolution optical image of a VOI or VOIs.

The imaging swath width of the optical satellite 350 is smaller than the imaging swath of the next X-band SAR satellite. The imaging swath width may be greater than 5km. The resolution of the optical satellite 350 is higher than the next gen X-band SAR satellite.

The optical satellite 350 sends the high resolution optical image(s) to relay satellite 316 in the ISL constellation 310.

At 424, relay satellite 316 sends the information gathered from all of the satellite collectors 322, 332, 342, 352 to an end user reception system 360. The end user reception system 360 may be in-theatre or out of theatre and may or may not be the end user ordering system 302. The end user receiving the output of the ship detection process may or may not be the same as the end-user who placed the order.

The trailing time (spacing) between data acquisition by imaging satellites is based on how quickly processing, exploitation, and tasking of the next satellite can be performed.

In other embodiments, imaging satellites with different sensor types may be employed.

In other embodiments, clusters of imaging satellites may be employed.

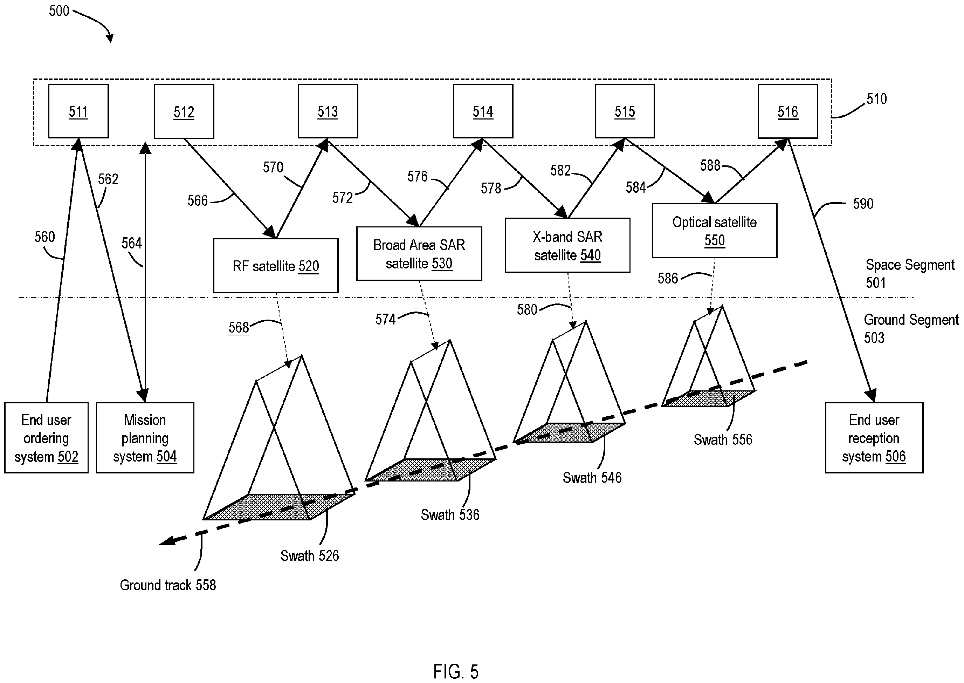

Referring now to Figure 5, shown therein is an example 500 of the specific ship detection system and method embodiment of Figures 3 and 4, according to an embodiment.

The system 500 includes a space segment 501 and a ground segment 503. The ground segment 503 includes an end-user ordering system 502, a mission planning system 504, and an end-user reception system 506. The space segment 501 includes intersatellite link relay constellation 510 and a constellation of four imaging satellites including an RF satellite 520, a broad area SAR satellite 530, a next gen X-band SAR satellite 540, and an optical satellite 550.

The ground segment may also include at least one ordering system for inputting orders, at least one spacecraft control system for controlling at least one spacecraft, and at least one data chain system for managing data.

The ISL relay constellation includes relay satellites 511, 512, 513, 514, 515, and 516, representing a subset of satellites in the ISL relay constellation. In other embodiments the ISL relay 510 may contain many more satellites, possibly on the order of hundreds of satellites. In the embodiments of Figures 3, 4, and 5, each relay satellite communicates with only two imaging satellites and each imaging satellite communicates with only two relay satellites. In some embodiments, multiple relay satellites may be responsible for a single step of the ship detection method.

RF satellite 520 has an imaging swath 526. In an example embodiment, imaging swath 526 may be greater than 1000km.

Class C-V SAR satellite 530 has an imaging swath 536. In an example embodiment, imaging swath 536 may be greater than 500km.

Next gen X-ban SAR satellite 540 has an imaging swath 546. In an example embodiment, imaging swath 546 may be greater than 30km.

Optical satellite 550 has an imaging swath 556. In an example embodiment, imaging swath 556 may be greater than 5km.

The imaging swaths 526, 536, 546, and 556 are simplifications of actual imaging swaths meant to represent that the imaging swaths of the satellites have an overlapping area. As discussed above, although the imaging satellites are shown to be on the exact same ground track 558, the imaging satellites may not have identical ground tracks. However, the ground tracks must be close enough that the satellites have overlapping accessible swaths.

The imaging satellites 520, 530, 540, and 550 are all shown in Figure 5 as nadir-looking satellites for simplicity. However, different types of satellites, including those types shown and discussed in Figure 5, may actually be side-looking satellites.

The imaging swaths 526, 536, 546, and 556 as shown in Figure 5 are meant to convey that the satellites are imaging the same area at different times, as Figure 5 is a time series of leading and trailing satellites passing over the AOI.

A horizontal dot-dashed line is used to separate the space segment 501 (above) from the ground segment 503 (below) of the ship detection system 500.

An example operational sequence performed by the system 500 will now be described.

At 560, an order is sent via uplink from end user ordering system 502 to relay satellite 511 in ISL layer 510. The relay satellite 511 (any other satellites in ISL layer 510) may be in LEO, MEO, or GEO. The input is a user-specified order. The order content may be specified by the user, for example, though a user interface at or in communication with the end user ordering system 501.

The order may include an area of interest ("AOI"). The AOI defines an area where sensor data collection is to take place. In some embodiments, the AOI may be specified as a defined area polygon. Orders specifying an AOI may be referred to as "area-based ordering". In other embodiments, the order may specify one or more individual collection swaths. The individual collection swaths may be user-selected, for example at the end user ordering system 502. In some cases, the end user ordering system 502 may display a list of available swaths that are selectable to include in the order. In some cases, the list of available swaths may be a subset of swaths that are determined according to some filter criteria. The filter criteria may be user-selected or determined based on a user input at the end user ordering system 502. In an example, the filter criteria may be a date range. The user may input a date range at the end user ordering system 502 and the end user ordering system 502 determines and displays a list of available swaths based on the specified date range. The user may then select an available imaging swath width and the end user ordering system 502 includes the selected imaging swath width in the order. Orders specifying an imaging swath width may be referred to as "swath-based ordering".

The order may include a date range.

The order may include one or more desired modes.

The order may specify sensor types from which data is to be collected. In an embodiment, sensor types may include RF sensing, Broad area C-band SAR, AIS, X-band SAR, and optical sensing. An order may specify all sensor types or some subset of sensor types (e.g., only RF, C-band SAR, and X-band SAR).

The order may include a delivery destination. The delivery destination specifies a receiving device that is to receive an output of the ship detection operation. The delivery destination may include a device identifier that can be used by the transmitting device to direct the output to the receiving device. For example, in the case of Figure 5, the delivery destination is the end user reception system 506. The delivery destination may vary. The end user reception system 506 may be associated with the same user as the end user ordering system 502. The end user reception system 506 may be the same device as the end user ordering system 502. The end user reception system 506 may be associated with a different user than the ordering user. The end user reception system 506 may be in-theatre or otherwise.

The ISL layer 510 may provide connectivity between the end user ordering system 502 and the mission planning system 504. The connectivity enables the order to be placed at any time from any user location on the globe (i.e., end user ordering system 502 may be located anywhere on the globe).

The relay satellite 511 (and other satellites in ISL relay layer 510) may be in LEO, MEO or GEO.

At 562, the order is sent via downlink from relay satellite 511 in ISL Layer 510 to mission planning system 504. The mission planning system 504 may be a cloud-based ground segment (Mission Planning System). A downlink reception station antenna for the mission planning system 504 may be known in advance.

In some cases, the order may "hop" between multiple different satellites in the ISL relay constellation 510 before the order is provided to the mission planning system 504 in the ground segment 503.

In some cases, the reception station receives the order, and sends the order to a cloud-based Mission Planning System (part of the Ground Segment, e.g., AWS GS Central Processing Region). The mission planning system 504 may be configured to check satellite resource availability for each sensor in the system (e.g., availability of satellites 520, 530, 540, 550), and plan the actual collections and spacecraft tasking commands. The mission planning system 504 is configured to generate one or more spacecraft/satellite tasking commands based on the information contained in the received order.

At 564, the mission planning system 504 sends the tasking commands via uplink to relay satellite 512 in ISL Layer 510. The tasking commands contain spacecraft tasking information used to task each sensor in the system 500. The tasking commands may be one or more commands depending on the nature of the order and number of sensors being used.

The tasking commands include initial spacecraft tasking for the broad area RF Collector of the RF satellite 520, the SAR collector of the broad area SAR satellite 530, the SAR collector of the X-band SAR satellite 540, and the optical collector of the optical satellite 550. The initial spacecraft tasking command may include a general direction for each of the satellites 520, 530, 540, and 550 to point in. The initial tasking commands may also include specific imaging coordinates for each satellite to image as they pass over the coordinates. If the initial tasking commands of any trailing satellites include imaging coordinates, the coordinates may be modified during operation based on data collected and processed by leading satellites.

At 566, relay satellite 512 in the ISL Layer 510 sends the tasking commands to the Broad Area RF Satellite 520. The tasking commands for the Broad Area RF Collector received at 566 may indicate an area and a time (based on the order) where a user wants to geolocate RF emitters.

At 568, the RF satellite 520 collects RF signals (RF data) over the specified AOI (specified in the order and subsequently in the tasking commands). The RF satellite 520 may use an onboard processor to parse or analyze the received tasking commands (e.g., to identify a specified area of interest) and generate RF sensor command data. The RF sensor command data is sent to the RF sensor, which causes the RF sensor to collect the RF signals over the AOI. The collected RF signals may be considered raw RF sensor data. In some cases, the RF data is processed onboard the RF Collector satellite 520 via an onboard processor. In other cases, the RF data may be sent to the ground segment 503 via the ISL layer 510 for ground processing (at a ground processing system or ground terminal as shown in Figure 1A). Generally, the raw RF data is processed to determine geolocation information for RF emitting vessels. In either case, the RF data is processed to obtain one or more processed data products that include geolocation information for RF emitters that are detected in the scene across one or more frequency bands. For example, in some embodiments, RF emitters may be detected in any one or more of S-band marine radar, X-band marine radar, L-band comms, UHF comms, and VHF comms.

During processing of the RF data, some detected RF emitters may be categorized or classified as "Emitters of Interest" (EOIs), which warrant further imaging by other sensors in the train (e.g., by sensors on satellites 530, 540, and 550). In some cases, the EOI categorization process may be performed with human-intervention. Such processing may use an ISL 510 hop to the ground segment 503 or may already be on the ground 503 if processing of collected RF data is being performed by a ground processing system in the ground segment 503. In some cases, the EOI categorization process may be performed in an automated fashion based on user-selected criteria. An example of a user-selected criteria is all X-band marine radar emitters within x kilometers of a defined coast or land mass. Other types of user-selected criteria will be apparent. The user-selected criteria may be received via a user interface at the end user ordering system 502 (e.g., when the order is generated). The user-selected criteria may be used to effectively filter detected RF emitters for RF emitters satisfying the user-selected criteria (EOIs). With automated EOI selection, the EOI filtering process may be performed onboard the RF collector spacecraft 520 or on the ground 503.

In some cases, if no EOIs are identified in the RF data, the region collected by the RF satellite 520 may be imaged again by the trailing C-band SAR satellite 530. For example, a tasking command may be generated automatically upon determination of no detected EOIs that instructs the C-band SAR satellite 530 to image the same AOI and such tasking command is sent to the C-band SAR satellite 530 via the ISL layer 510.

At 570, the RF satellite 520 sends the cross-cueing information or cross-cueing data, including geolocation information, to a satellite 513 in the ISL Layer 510. The cross-cueing information includes order and tasking information for the broad area SAR satellite 530 and may include further relevant information, such as VOI information.

At 572, relay satellite 513 in the ISL Layer 510 sends order and tasking information to the broad area SAR satellite 530. The broad area SAR satellite 530 includes an onboard broad area C-band SAR collector and an AIS Collector.

The order and tasking information being relayed from satellite 513 to C-band SAR satellite 530 contains order and tasking information (e.g., AOI polygon or available swath, time of imaging, beam modes) based on the collection results of the RF satellite 520. For instance, a processed data product generated based on the RF data collected by RF satellite 520 may identify 10 EOIs in the RF scene with corresponding latitude and longitude positions. To cross-cue and capture those 10 EOIs in C-band SAR imagery may require a particular swath (e.g., 450 km wide vessel detection mode) at a particular beam mode position (e.g., near range or far range - i.e., how far off nadir). The order and tasking information may be identical to the initial tasking command sent by the mission planning system 504 with the addition of the data collected by the RF satellite 520, or the initial tasking command may be modified. For example, if initial coordinates were received from the mission planning system 504, those coordinates may be changed based on the data collected by the RF satellite 520.

In some cases, if a Vessel-of-Interest (VOI) was expected in a location but not detected by the RF satellite 520 (for example, because it either was not there or was not emitting an RF signal), the C-band SAR collector satellite 530 may image that same location and confirm the presence or absence of that VOI.

At 574, the C-V SAR satellite 530 uses onboard broad area C-band SAR collector and AIS Collector to image over the specified AOI. The C-band satellite 530 may include both a primary SAR payload and a secondary AIS payload, with coincident imaging scenes. The SAR sensor collects C-band SAR data and the AIS collector collects AIS data. Such collected data may be referred to as raw C-band SAR data and raw AIS data. The raw SAR and AIS data is then processed to obtain one or more processed data products. In some cases, the SAR and AIS data is processed onboard the broad area C-band and AIS Collector satellite 530 via an onboard processor. In other cases, the SAR and AIS data may be sent to a ground processing system (as shown in Figure 1A) in the ground segment 503 via the ISL layer 510 for ground processing.

The processed data product includes one or more vessel detection reports. The vessel detection report may include position data of ships detected in the SAR image. The vessel detection report may include an estimated size, heading and velocity for each detected ship. The vessel detection report may include correlation with AIS (where an identified vessel is not transmitting AIS, the vessel may be classified as a "dark target". The vessel detection report may include an "image chip" of a detected vessel. The image chip may be similar to a cropped-out thumbnail showing the actual vessel in the SAR image. The vessel detection report (or some subset of the data therein) may be considered cross-cueing data that is used by the system to cross-cue subsequent sensor data collection (e.g., via satellite 540).

Processing the C-band SAR and AIS data may include categorizing or classifying some identified vessels as "Vessels of Interest" (VOIs), which warrant further imaging by other sensors in the train (e.g., by sensors on satellites 540 and 550). In some cases, the VOI classification process may be performed with human-intervention. Such processing may use an ISL 510 hop to the ground segment 503 or may already be on the ground if processing of the collected C-band SAR data and AIS data is being performed by a ground processing system in the ground segment 503. In some cases, the VOI categorization process may be performed in an automated fashion based on user-selected criteria. An example of a user-selected criteria is "all dark targets within x kilometers of a defined coast or land mass". Other types of user-selected criteria will be apparent. The user-selected criteria may be used to effectively filter detected vessels for vessels satisfying the user-selected criteria (VOIs). With automated VOI selection, the VOI filtering process may be performed onboard the C-band SAR spacecraft 530 or on the ground 503. The vessel detection onboard processing (VDOP) may be similar to the process described in PCT/ CA2021/051298, as discussed above.

At 576, the C-band SAR and AIS Collector satellite 530 sends the cross-cueing data (e.g., a processed data product including one or more vessel detection reports) to relay satellite 514 in the ISL Layer 510.

At 578, relay satellite 514 in the ISL Layer 510 sends order and tasking information to the (high resolution) X-band SAR satellite 540. The X-band SAR satellite 540 includes an onboard X-band SAR collector.

The order and tasking information being relayed from satellite 514 to X-band SAR satellite 540 contains order and tasking information and data collected by satellite (e.g., AOI polygon or available swath, time of imaging, beam modes) modified, where applicable, by the collection results of the C-band SAR and AIS Collector satellite 530. For instance, a processed data product generated based on the C-band SAR data (and AIS data) collected by the C-band SAR satellite 530 may identify 10 VOIs in the C-band SAR scene with corresponding latitude and longitude positions. The 10 VOIs may cover a specific region. To cross-cue and capture those 10 VOIs in X-band SAR imagery may require a particular swath (e.g., a 3m Stripmap Mode) at a particular beam mode position (e.g., near range or far range - i.e., how far off nadir).

In some cases, if a Vessel-of-Interest (VOI) was expected in a location but not detected by the Broad Area C-band SAR and AIS Collector satellite 530 (for example, because it either was not there or was too small to be detected and dark (i.e., not transmitting AIS)), the High Res X-band SAR Collector satellite 540 may image that same location and confirm the presence or absence of that VOI.

At 580, the X-band satellite 540 uses an onboard X-band SAR collector to image over the specified AOI. The X-band SAR satellite 540 processes the collected X-band SAR data (raw SAR data) via an onboard processor to obtain a processed data product. The processed data product includes one or more vessel detection reports. The vessel detection report may include position data of ships detected in the SAR image. The vessel detection report may include an estimated size, heading and velocity for each detected ship. The vessel detection report may include an "image chip" of a detected vessel. The image chip may be similar to a cropped-out thumbnail showing the actual vessel in the SAR image. It should be noted that the SAR data collected by the X-band SAR satellite 540, and the processed data products (including vessel reports) generated therefrom, are of higher resolution than the SAR data collected by the Broad Area C-band SAR satellite 530 because of X-band SAR beam mode selection and estimated position of the VOIs from the previous sensor (i.e., onboard the C-band SAR satellite 530). The estimated position of the VOIs are identified in the processed data product (vessel detection report) generated based on the C-band SAR data and used by the X-band SAR satellite 540 when collecting the X-band SAR data. The vessel detection report (or some subset of the data therein) may be considered cross-cueing data that is used by the system to cross-cue subsequent sensor data collection (e.g., via satellite 550).

Processing the X-band SAR data may include categorizing or classifying some identified vessels as "Vessels of Interest" (VOIs), which warrant further imaging by other sensors in the train (e.g., by sensor on satellite 550). In some cases, the VOI classification may be performed with human-intervention. Such processing may use an ISL 510 hop to the ground segment 503 or may already be on the ground if processing of the collected X-band SAR data is being performed by a ground processing system in the ground segment 503. In some cases, the VOI categorization process may be performed in an automated fashion based on user-selected criteria. An example of a user-selected criteria is "all vessels within x kilometers of a defined coast or land mass". Other types of user-selected criteria will be apparent. The user-selected criteria may be used to effectively filter detected vessels for vessels satisfying the user-selected criteria (VOIs). With automated VOI selection, the VOI filtering process may be performed onboard the X-band SAR spacecraft 540 or on the ground 503. The VDOP may be similar to the process described in PCT/ CA2021/051298, as discussed above.

In some cases, the X-band SAR satellite 540 may generate a direct tasking command for the trailing high resolution optical collector satellite 550 based entirely on the VOIs detected in the leading high resolution X-band SAR data.

At 582, the X-band SAR Collector satellite 540 sends the cross-cueing data (e.g., a processed data product including one or more vessel detection reports) to relay satellite 515 in the ISL Layer 510.

The incorporation of the ISL relay layer 510 eliminates the need for a flight time to a ground station mask and enables a faster cross-cue process, including satellite trailing time between due to lower latency and NRT communication availability. Additionally, the tasking is done through the ISL relay link 510 instead of only via the ground, which can enable faster tasking. For example, a trailing High Res X-Band SAR Collector satellite may be directly tasked from the ISL relay layer based on the VOIs detected by the Broad Area C-Band SAR and AIS Collector.

At 584, relay satellite 515 in the ISL Layer 510 sends order and tasking information to the optical collector satellite 550. The optical collector satellite 550 includes an onboard optical sensor for collecting optical image data.

The order and tasking information being relayed from satellite 515 to optical satellite 550 contains order and tasking information passed along from the original order (e.g., AOI polygon or available swath, time of imaging) modified, where applicable, by the collection results of the X-band SAR Collector satellite 540. For instance, a processed data product generated based on the X-band SAR data collected by the X-band SAR satellite 540 may identify 10 VOIs in the X-band SAR scene with corresponding latitude and longitude positions. The 10 VOIs may cover a specific region. To cross-cue and capture those 10 VOIs in Optical imagery may require a particular off-nadir angle within a field-of-regard of the optical satellite 550.

At 586, the high resolution optical collector satellite 550 uses an onboard optical sensor to image over the specified AOI and produces one or more high resolution optical image of one or more VOIs within the AOI. The optical satellite 550 may generate a processed data product via an onboard processor. The processed data product includes the high resolution optical image or images. The processed data product may be in the form of a vessel detection report, as described herein. The processed data product may include data from any of the previously generated processed data products (e.g., by satellites 520, 530, 540).

At 588, the processed data product including the high resolution optical image data is sent from the optical satellite 550 to relay satellite 516 in the ISL layer 510.

At 590, the processed data product is sent from relay satellite 516 in the ISL Layer 510 via downlink to end user reception system 506 for consumption by an end user or customer.

It should be noted that, in system 500, the output from the optical satellite 550, or any preceding sensor (e.g., from any of satellites 520, 530, 540), can be sent from the ISL relay layer 510 down to an end user who may or may not be situated in-theatre (i.e., to end user reception system 506, which may or may not be in theatre).

Given that the ISL layer 510 can provide continuous connectivity between the sensors on satellites 520, 530, 540, 550 and the end user, sensor products generated based on data collected by satellites 520, 530, 540, 550 may be provided at any time to any user location on the globe.

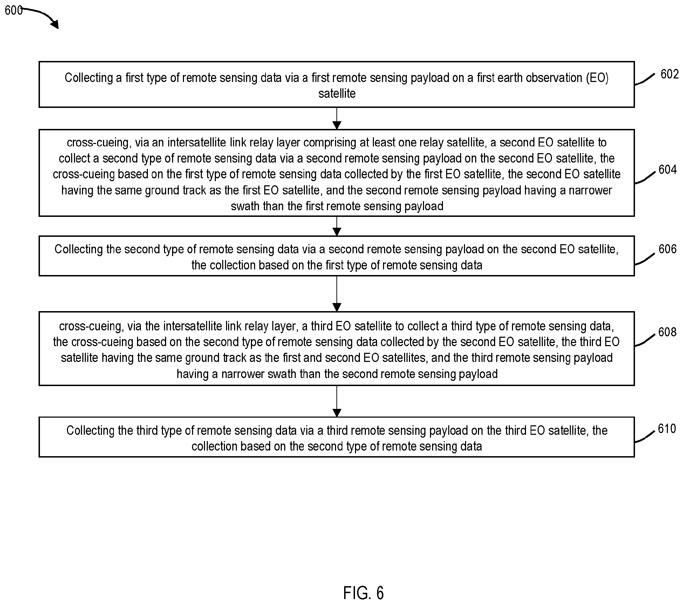

Referring now to Figure 6 shown therein is a method 600 of data collection for maritime surveillance, according to an embodiment. The method 600 may be implemented, for example, using the system 100 of Figure 1, or the system 500 of Figure 5.

At 602, the method 600 includes collecting a first type of remote sensing data via a first remote sensing payload on a first earth observation (EO) satellite.

At 604, the method 600 further includes cross-cueing, via an intersatellite link relay layer comprising at least one relay satellite, a second EO satellite to collect a second type of remote sensing data via a second remote sensing payload on the second EO satellite, the cross-cueing based on the first type of remote sensing data collected by the first EO satellite, the second EO satellite having an overlapping accessible swath with the first EO satellite, and the second remote sensing payload having a narrower imaging swath than the first remote sensing payload.

At 606, the method 600 further includes collecting the second type of remote sensing data via a second remote sensing payload on the second EO satellite, the collection based on the first type of remote sensing data.

At 608, the method 600 further includes cross-cueing, via the intersatellite link relay layer, a third EO satellite to collect a third type of remote sensing data, the cross-cueing based on the second type of remote sensing data collected by the second EO satellite, the third EO satellite having an overlapping accessible swath with the first and second EO satellites, and the third remote sensing payload having a narrower imaging swath than the second remote sensing payload.

At 610, the method 600 further includes collecting the third type of remote sensing data via a third remote sensing payload on the third EO satellite, the collection based on the second type of remote sensing data.

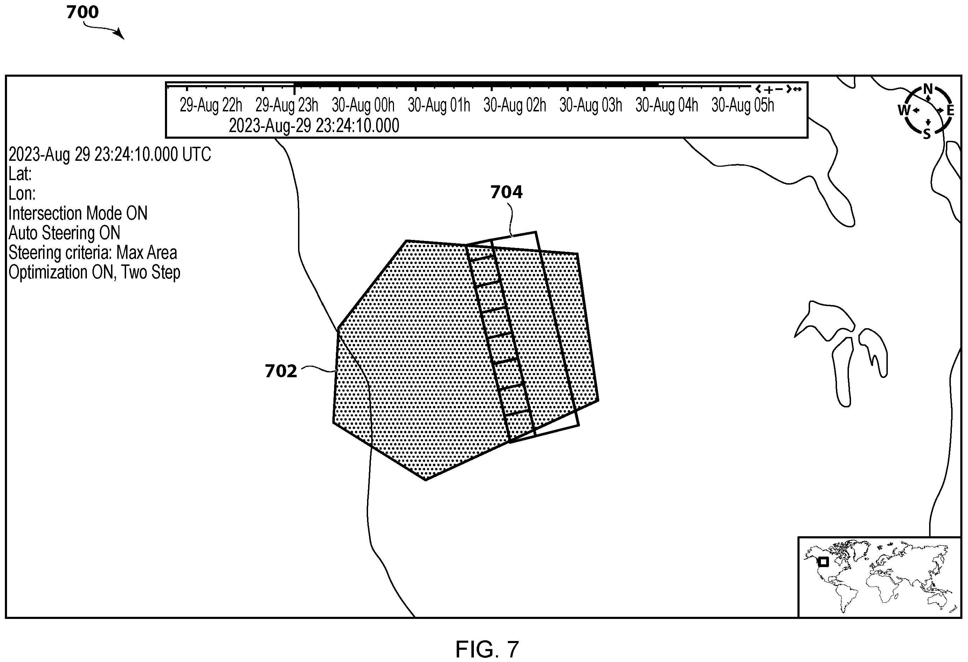

Figure 7 is an example satellite image generated by the system of the present disclosure showing a polygon area (the AOI) and a single remote sensing swath overlayed on the image.

Image 700 shows a satellite image over North America, with a box 702 representing an area of interest (AOI) 702 which is to be surveilled, and a remote sensing swath 704 of a satellite. Remote sensing swath 704 is within the AOI 702. Each of the imaging satellites tasked with surveilling the AOI would have overlapping accessible swath widths, with each of the accessible swath widths overlapping with the AOI 702. The first remote sensing satellite may have a remote sensing swath which covers the entirety of the AOI, with each subsequent remote sensing satellite adjusting a location of the remote sensing swath within the AOI based on the remote sensing data collected by the previous remote sensing satellites. For example, the first remote sensing satellite may have collected remote sensing data which was more or less centered within the AOI 702 and covered the entirety of AOI 702, with the remote sensing data of each subsequent remote sensing satellite adjusting the remote sensing swaths of trailing remote sensing satellites such that the remote sensing satellite which is capturing remote sensing swath 704 has been tasked with capturing the specific area (small and off-centre of the AOI 702) which is shown in Figure 7.

While the above description provides examples of one or more apparatus, methods, or systems, it will be appreciated that other apparatus, methods, or systems may be within the scope of the claims as interpreted by one of skill in the art.

## Claims

1. A system for enhanced marine ship detection, comprising:
a ground segment including a mission planning system configured to receive an order for ship detection from an ordering device generate a set of tasking commands based on the order, wherein each tasking command includes a set of coordinates for data collection by a satellite;
an intersatellite link (ISL) relay layer comprising a plurality of relay satellites in Earth orbit, the ISL relay layer configured to receive the set of tasking commands from the mission planning subsystem;
a plurality of Earth observation satellites having overlapping accessible swaths, including:
a first Earth observation satellite having a first sensor and a first imaging swath width, the first Earth observation satellite configured to receive a first tasking command of the set of tasking commands, the first tasking command including a first set of coordinates, from the ISL relay layer, collect first sensor data at the first set of coordinates, and send the first sensor data to the ISL relay layer;
a set of trailing Earth observation satellites including at least a second Earth observation satellite, the second Earth observation satellite having a second sensor and a second imaging swath width, wherein the second Earth observation satellite trails behind the first Earth observation satellite on the same ground track as the first Earth observation satellite, the second Earth observation satellite configured to receive a second tasking command, including a second set of coordinates, from the ISL relay layer, collect second sensor data at the second set of coordinates, and send the second sensor data to the ISL relay layer, wherein the second set of coordinates is based on the first sensor data; and
a reception system to receive ship detection data including the first sensor data and second sensor data from the ISL relay layer, wherein the ship detection data is processed to generate at least one vessel detection report.

2. The system of claim 1 wherein the vessel detection report includes at least one of a position of at least one ship, an estimated size of at least one ship, a heading of at least one ship, a velocity of at least one ship, an AIS data correlation of at least one ship, an image chip of at least one ship, a vessel of interest (VOI) classification of at least one ship.

3. The system of claim 1, wherein the set of trailing Earth observation satellites further comprises N Earth observation satellites which each trail in sequence behind the second Earth observation satellite, wherein N is any positive integer, each of the N Earth observation satellites having a respective sensor and a respective imaging swath width, wherein each of the N Earth observation satellites is configured to receive a respective tasking command from N tasking commands sent to the ISL relay layer by the mission planning system, collect respective sensor data based on the respective tasking command, and send the respective sensor data to the ISL relay layer.

4. The system of claim 3, wherein the second tasking command is altered based on the first sensor data.

5. The system of claim 3, wherein the ISL relay layer receives the N respective tasking commands from the mission planning system before the first sensor data is collected and sent to the ISL relay layer.

6. The system of claim 5, wherein each of the N respective tasking commands is altered based on data from Earth observation satellites which each of the N Earth observation satellites trails.

7. The system of claim 1, wherein the ground segment further includes at least one spacecraft control system configured to control and maintain operation of any of the plurality of Earth observation satellites.

8. The system of claim 1, wherein the ground segment further includes at least one data chain subsystem configured to receive image data from at least one ground terminal and reconstruct the image data into raw data for processing into products.

9. The system of claim 1, wherein at least one of the first sensor data and the second sensor data is sent to a ground terminal of the ground segment via the plurality of relay satellites to be processed by the ground terminal.

10. The system of claim 1, wherein the second Earth observation satellite has a smaller swath width and a greater resolution than the first Earth observation satellite.

11. A method of maritime surveillance, comprising:
receiving, by a network interface or input interface at a mission planning system of a ground segment, an order for maritime surveillance from an ordering device;
generating, by a processor of the mission planning system, a plurality of tasking commands based on the order, wherein each tasking command includes a set of coordinates for a satellite;
transmitting, via an antenna system of the ground segment, the plurality of tasking commands to an intersatellite link (ISL) relay layer as an RF signal;
transmitting, by an antenna system of the ISL relay layer, a first tasking command of the plurality of tasking commands to a first Earth observation satellite, wherein the first tasking command includes a first set of coordinates;
collecting, by a first sensor of the first Earth observation satellite having a first remote sensing swath width, first remote sensing data at the first set of coordinates received from the ISL relay layer and transmitting the first remote sensing data to the ISL layer via an antenna system of the first Earth observation satellite;
cross-cueing, via the ISL relay layer, at least a second earth observation satellite to collect a second remote sensing data, at a second set of coordinates, using a second sensor having a second remote sensing swath width, the cross-cueing based on a second tasking command and the first remote sensing data, wherein the first Earth observation satellite and the second Earth observation satellite have overlapping accessible swath widths and wherein the second Earth observation satellite trails the first Earth observation satellite on the same ground track;
transmitting, via an antenna system of the second earth observation satellite, the second remote sensing data to the ISL relay layer;
transmitting, via the antenna system of the ISL relay layer, maritime surveillance information as an RF signal to a reception system of the ground segment for display at an end user device of the ground segment;
displaying, on a graphical user interface of an end user device, at least one vessel detection report generated from the maritime surveillance information.

12. The method of claim 11 further comprising:
cross-cueing, via the intersatellite link relay layer, **N** Earth observation satellites, wherein **N** is any positive integer, to collect respective remote sensing data, wherein each of the **N** Earth observation satellites trails in sequence behind the second Earth observation satellite, the cross-cueing for each of the **N** Earth observation satellites is based on a respective tasking command and the remote sensing data from each of the Earth observation satellites which each respective **N** Earth observation satellites is trailing, and wherein each of the **N** Earth observation satellites has a **N**th remote sensing swath width and each of the **N** Earth observation satellites has an overlapping accessible swath width with the first Earth observation satellite and the second Earth observation satellite.

13. The method of claim 11 further comprising at least one spacecraft control system configured to control any of the plurality of Earth observation satellites.

14. The method of claim 11 further comprising at least one data chain subsystem configured to receive image data from at least one ground terminal and reconstruct the image data into raw data for processing into products.

15. The method of claim 11 wherein the second Earth observation satellite has a smaller swath width and a greater resolution than the first Earth observation satellite.
